# FASCICULE DE BREVET EUROPEEN

(11) **EP 2 570 177 B1**
(45) Date de publication et mention de la délivrance du brevet: **09.03.2016**
(21) Numéro de dépôt: 12184522.6
(22) Date de dépôt: 14.09.2012
(51) Int. Cl.: B01D 53/86, B01D 53/96, F23J 15/02, B01D 53/50

(54) **Procédé et installation d'épuration de fumées**
Method and facility for purifying flue gases
Verfahren und Anlage zur Rauchgasreinigung

(30) Priorité: 16.09.2011 FR 1158263
(43) Date de publication de la demande: 20.03.2013
(73) Titulaire: LAB SA, 69007 Lyon (FR)
(72) Inventeur: Tabaries, Franck, 83190 OLLIOULES (FR); Siret, Bernard, 69200 VENISSIEUX (FR)
(74) Mandataire: Grand, Guillaume

(56) Documents cités:
- EP-A1- 1 576 999
- EP-A1- 1 949 956
- WO-A1-2010/027617
- US-A1- 2008 089 822

## Description

La présente invention concerne un procédé et une installation d'épuration de fumées. L'invention s'intéresse en particulier à l'épuration des fumées de combustion, qui contiennent des oxydes d'azote, des oxydes de soufre et de l'acide chlorhydrique.

Lors de la combustion de déchets comme les déchets ménagers ou hospitaliers par exemple, les fumées de combustion produites contiennent une proportion appréciable d'oxydes d'azote et ne peuvent donc pas être rejetées à l'atmosphère sans traitement. Elles contiennent également des gaz acides comme l'acide chlorhydrique et le dioxyde de soufre. De plus, ces fumées de combustion contiennent d'autres polluants, ainsi que des poussières et des particules solides.

Plusieurs technologies sont disponibles pour l'élimination des composés acides, soit par des procédés humides dans lesquels on met en contact les fumées à épurer avec un liquide, soit par des procédés semi-secs dans lesquels on atomise une suspension de réactif avant de récupérer les résidus solides sur un filtre ou un électrofiltre, soit par des procédés secs dans lesquels on met en contact un réactif pulvérulent, comme la chaux ou le bicarbonate de sodium, avec les fumées à traiter et on collecte ensuite les résidus solides sur un filtre, notamment un filtre à manches. Dans le cas de l'utilisation des procédés secs, le ratio stoechiométrique, caractéristique de l'excès de réactif effectivement utilisé par rapport à ce qui est théoriquement nécessaire au sens de la chimie, est assez important.

Pour ce qui est des oxydes d'azote (NOx), plusieurs technologies sont disponibles et bien acceptées industriellement. Une première solution consiste à agir au niveau de la combustion proprement dite. Des brûleurs dits « bas-NOx » peuvent être utilisés dans le cas de la combustion du charbon ou du fuel, ou bien un excès d'air ou son étagement peuvent être modifiés, de façon que, dans les zones très chaudes, la formation des oxydes d'azote, à partir de l'azote de l'air, soit minimisée. Il a été également proposé d'enrichir l'atmosphère de combustion en oxygène ou de recycler du dioxyde de carbone pour accomplir cet effet. Cette première approche est limitée dans son efficacité et se révèle de plus peu commode à mettre en oeuvre dans le cas de l'incinération des déchets. De surcroît, cette solution ne peut aucunement suffire à amener la teneur en oxyde d'azote dans les fumées de combustion en deçà de 80 mg/Nm³ de NOx.

Une seconde approche consiste à injecter un réactif, usuellement de l'ammoniac ou de l'urée, dans une zone particulière de la combustion. Ce réactif se décompose alors et les radicaux générés réagissent pour empêcher la formation des oxydes d'azote ou détruire ceux déjà formés. Là encore, cette solution connaît des limites : il est difficile d'obtenir un rendement de destruction de plus de 70%, sauf à consentir une fuite d'ammoniac dépassant la dizaine de mg/Nm³. De surcroît, pour le cas particulier de l'incinération des déchets, on ne peut pas obtenir beaucoup mieux que 120 mg/Nm³ de NOx sans avoir une fuite d'ammoniac importante. Cette solution, dite SNCR (Selective Non Catalytic Reduction), n'est donc pas suffisante pour répondre aux besoins des unités modernes.

Aussi, la technique généralement utilisée quand on a besoin d'obtenir des teneurs de NOx inférieures à 80 mg/Nm³, consiste à recourir à l'utilisation d'un catalyseur de dénitrification : on parle alors d'une solution dite SCR (Selective Catalytic Reduction). Plus précisément, on fait réagir les oxydes d'azote avec un réactif approprié sur un catalyseur spécifique, maintenu à une température relativement élevée. Le réactif employé est typiquement l'ammoniac ou l'urée. Si cette technique est maintenant bien maîtrisée, certaines contraintes et limitations, comme l'existence de poisons (oxydes alcalins, phosphore, arsenic), qui peuvent se fixer sur les sites actifs du catalyseur, ou l'existence de composés (sulfates et hydrogenosulfates d'ammonium, SO₃...), qui peuvent se déposer et bloquer les pores du catalyseur, conduisent à une perte progressive de l'activité de ce catalyseur. Cela oblige soit à remplacer le catalyseur purement et simplement, soit à procéder à sa régénération. Une telle régénération peut être de nature thermique, en élevant la température à l'aide de brûleurs, ou bien être réalisée par lavage. Dans les deux cas, le réacteur catalytique est mis hors ligne, ce qui conduit à une indisponibilité de l'installation d'épuration des fumées.

Dans ce contexte, EP-A-1 576 999 a proposé de procéder à un compartimentage complet du catalyseur et de le régénérer compartiment par compartiment. Cela permet de conserver, globalement, l'installation en ligne pendant la régénération du catalyseur. Toutefois, cette solution reste coûteuse en raison du compartimentage, ainsi qu'en raison de la complexité des circuits de fumées et de la commande de ces circuits, qui résulte de ce compartimentage. EP-1 676 627 propose également un système similaire, par compartimentage du catalyseur, ce qui reste complexe.

De son côté, US-A-2008/089822, qui peut être considéré comme l'état de la technique le plus proche de l'invention, divulgue un procédé d'épuration de fumées, dans lequel des fumées traversent un filtre à manches avant d'être envoyées à un réacteur de dénitrification catalytique. Ce réacteur est régénéré thermiquement, en le soumettant de manière intermittente à un flux chaud pouvant être de la vapeur d'eau, tout en maintenant l'alimentation de ce réacteur avec les fumées provenant du filtre à manches

Ceci étant rappelé, le but de la présente invention est de proposer un procédé global et intégré d'épuration des fumées et de régénération d'un catalyseur de dénitrification de ces fumées, qui, tout en étant fiable, est économiquement avantageux et qui peut être réalisé en ligne, permettant ainsi de continuer à traiter des fumées pendant la régénération.

A cet effet, l'invention a pour objet un procédé d'épuration de fumées, tel que défini à la revendication 1.

Ainsi, le procédé conforme à l'invention permet de régénérer en ligne un catalyseur de SCR par voie thermique, en utilisant de la vapeur destinée à l'activation des résidus. Une des idées à la base de l'invention est de procéder à la régénération du catalyseur non pas dans sa globalité à un instant donné, mais zone par zone. Pour ce faire, selon l'invention, on définit, en amont du catalyseur à régénérer, des sections d'alimentation, dans lesquelles on admet, section après section, de la vapeur d'eau, ces sections étant individuellement activées l'une après l'autre de manière à élever la température d'une zone du catalyseur. La vapeur d'eau produit alors ses effets de régénération principalement, voire quasi exclusivement sur la portion du catalyseur visée par la zone activée. Autrement dit, les fractions d'alimentation précitées correspondent à des zones de l'espace, où l'alimentation en vapeur d'eau est activée tour à tour. Selon l'invention, le zonage du catalyseur est étendu, couche catalytique par couche catalytique, au moyen de plaques ou de tout autre moyen physique similaire, de telle façon à ce que l'effet chauffant et régénérateur de la vapeur admise se transmette d'une couche à l'autre. Il en résulte ainsi une simplification par rapport à une situation où on devrait, couche par couche, injecter un fluide de régénération à l'aide de moyens dédiés à chaque couche. Ce zonage définit, à l'intérieur du réacteur catalytique, une segmentation des volumes d'alimentation en fumées des différentes couches de catalyseur se succédant dans le réacteur, mais il faut bien réaliser que les fumées sont introduites dans le réacteur catalytique globalement, c'est-à-dire sur toute la couche de catalyseur amont et, par suite, sur la ou les couches de catalyseur suivantes, et qu'en particulier on n'utilise ni vanne, ni registre pour répartir ou orienter les fumées dans une zone plutôt qu'une autre. Selon une des caractéristiques de l'invention, le catalyseur est en permanence alimenté en fumées mélangées à un réactif de dénitrification, aussi bien dans les zones où de la vapeur est introduite que dans les zones où la vapeur n'est pas introduite. De ce point de vue, on peut dire que la totalité du catalyseur continue à travailler à la dénitrification, y compris dans les zones en cours de régénération.

Il faut bien comprendre que, pour obtenir des performances de réduction des oxydes d'azote suffisantes pour que les fumées puissent être rejetées à l'atmosphère, il est avantageux, voire nécessaire que plusieurs couches de catalyseur, typiquement entre 2 et 5, soient présentes dans le réacteur de dénitrification et que la régénération du catalyseur, qui perd de l'activité au fil du temps, doit pouvoir être effectuée efficacement pour toutes les couches.

Selon l'invention, de la vapeur d'eau servant à l'activation des résidus, résidus destinés à être recyclés, est en partie déroutée temporairement de sa fonction d'activation des résidus pour être surchauffée, notamment à une température comprise entre 250 et 450°C, et introduite de manière intermittente, notamment pendant une période de temps comprise entre 10 secondes et 5 minutes, dans une ou plusieurs des sections définies par les moyens de segmentation physique précités. Ainsi, lorsqu'on utilise à cette fin les plaques évoquées plus haut, de telles plaques sont par exemple situées immédiatement en amont de la première couche de catalyseur et d'autres plaques sont situées entre les couches de catalyseur.

Des caractéristiques additionnelles avantageuses du procédé conforme à l'invention, prises isolément ou selon toutes les combinaisons techniquement possibles, sont spécifiées aux revendications 2 à 8.

L'invention a également pour objet une installation d'épuration de fumées, telle que définie à la revendication 9.

L'invention sera mieux comprise à la lecture de la description qui va suivre, donnée à titre d'exemple et faite en se référant aux dessins pour lesquels :
- la figure 1 est un schéma en perspective d'un mode de réalisation du réacteur de dénitrification catalytique, qui montre un arrangement possible des moyens de segmentation et de distribution de la vapeur de régénération ;
- la figure 2 représente une installation de mise en oeuvre du procédé conforme à l'invention, et
- la figure 3 représente une variante de l'installation de la figure 2, mettant également en oeuvre le procédé selon l'invention.

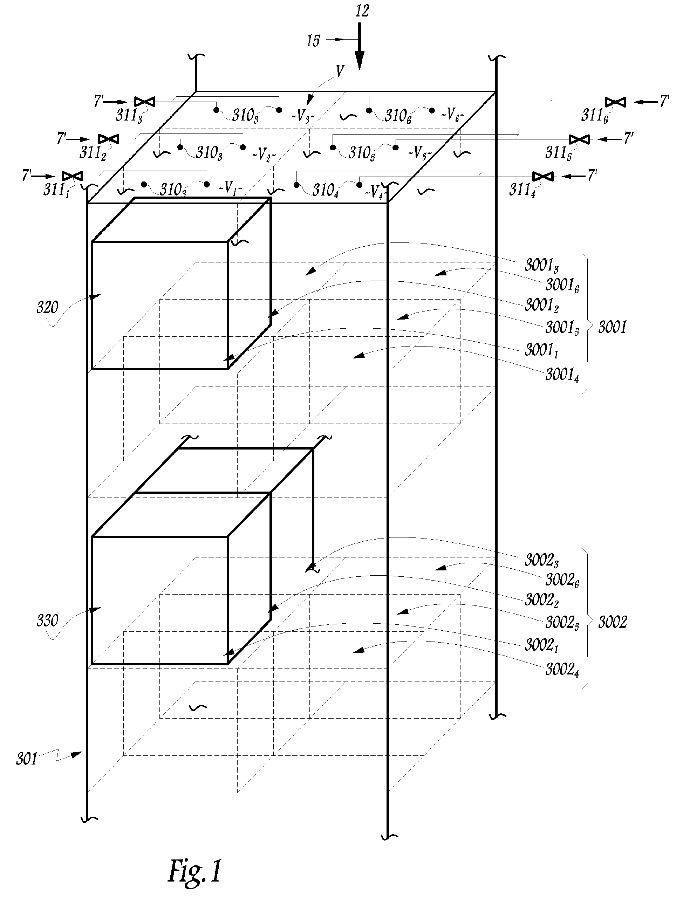

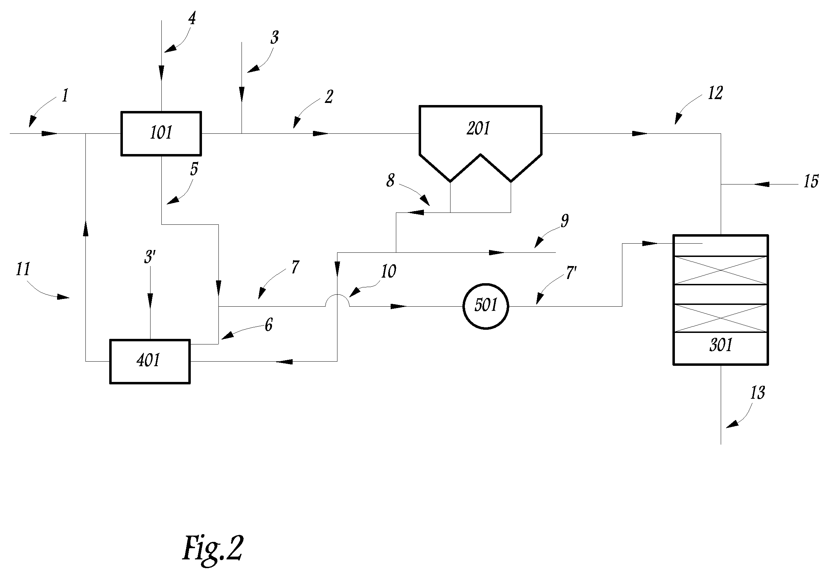

Dans la réalisation préférée, montrée par les figures 1 et 2, des fumées à épurer 1 sont introduites dans un évaporateur ou échangeur/vaporiseur 101, qui peut être constitué de faisceaux tubulaires et qui, par transfert de chaleur, génère de la vapeur d'eau 5 tout en refroidissant les fumées, ce qui est favorable à la captation des polluants acides subséquente. Les fumées ayant traversé l'échangeur 101, qui sont référencées 2, sont introduites dans un filtre à manches 201. Un réactif de neutralisation 3 est avantageusement introduit dans ces fumées 2. Les solides collectés 8 sont recyclés pour la majeure partie vers un contacteur gaz-solides 401, dont la fonction est de réaliser une activation des résidus recirculés, avant leur réintroduction, par une ligne 11, dans le flux des fumées 1 et qu'on peut donc qualifier de réacteur d'activation.

La vapeur produite 5 est normalement dirigée en totalité vers le contacteur 401, comme indiqué par le flux de vapeur 6, de façon à réaliser l'activation des résidus, sauf quand on procède à une régénération, auquel cas une partie 7 de cette vapeur est surchauffée par une unité 501, pouvant être une batterie de chauffe électrique, et sert à la régénération du catalyseur.

Selon la réalisation préférée, les fumées 12, ayant traversé le filtre 201, sont admises dans un réacteur de dénitrification catalytique 301, dit SCR. Des réactifs de neutralisation des polluants acides sont introduits, par une ligne 3 ou une ligne 3', au filtre à manches 201 ou au réacteur d'activation 401. Il est à noter que ces réactifs peuvent n'être introduits qu'en un point. Ces réactifs sont, par exemple et de manière non limitative, constitués de chaux éteinte, de chaux vive, de magnésie ou de bicarbonate de sodium. Un réactif de dénitrification, pouvant être, par exemple, de l'ammoniac ou de l'urée, est admis par une ligne 15 au réacteur de dénitrification 301.

Selon l'invention, la régénération du réacteur de SCR est effectuée en prélevant de manière intermittente la partie 7 de la vapeur 5 en utilisant un jeu de vannes non représenté, en surchauffant cette vapeur à l'aide du surchauffeur 501 et en alimentant le réacteur de dénitrification 301 par le flux 7' obtenu, qui a été porté à une température comprise entre 250 et 450 °C par le surchauffeur 501.

Sur la figure 1 est représenté, de manière schématique et partielle, un agencement possible du réacteur de dénitrification 301. Ce réacteur catalytique est alimenté par les fumées 12 mélangées au réactif de dénitrification, en vue de les dénitrifier. Ce réacteur contient un catalyseur étagé sur plusieurs couches 3001, 3002, etc. De manière préférée, les fumées traversent le réacteur de manière verticale ascendante ou verticale descendante, mais d'autres orientations, par exemple horizontale, sont possibles. Dans ce réacteur 301, on fait réagir les oxydes d'azote contenus dans les fumées 12 avec le réactif précité, mélangé aux fumées en amont du réacteur 301. Ce catalyseur est d'une technologie connue en soi et est par exemple constitué de plaques ou de canaux. Il opère à une température de service comprise entre 140 °C et 300 °C, de préférence entre 170 °C et 240 °C.

Comme bien visible sur la figure 1, les fumées à dénitrifier 12 sont amenées jusqu'au catalyseur par un conduit ou un organe similaire, qui définit, immédiatement en amont de la première couche 3001 du catalyseur, une région volumique V d'alimentation du catalyseur par les fumées. Selon une des caractéristiques de l'invention, on définit une segmentation de cette région volumique V, en une pluralité de zones, en l'occurrence six zones dans l'exemple montré sur la figure, qui sont respectivement référencées V₁, V₂,... V₆. Ces zones V₁ à V₆ sont prévues pour que chacune d'entre elles soit traversée par une partie du flux des fumées 12 : ainsi, en coupe transversale au flux, c'est-à-dire dans un plan perpendiculaire à la direction d'écoulement des fumées 12, ces zones V₁ à V₆ présentent chacune une section non nulle, en étant notamment réparties de manière régulière, par exemple suivant un motif en lignes et en colonnes sur les figures. Comme expliqué ci-après, ces zones V₁ à V₆ sont respectivement associées à des portions de la première couche, du catalyseur, référencées 3001₁ à 3001₆ sur la figure 1 : ces portions 3001₁ à 3001₆ représentent, conjointement, la totalité de la première couche 3001 du catalyseur, en incluant chacune une partie de la surface d'entrée de cette première couche du catalyseur, comme bien visible sur la figure 1.

Similairement, la seconde couche 3002 du catalyseur, c'est-à-dire la couche juste aval à la couche 3001 suivant l'écoulement des fumées dans le réacteur 301, se voit définir des portions 3002₁ à 3002₆, en correspondance avec les portions 3001₁ à 3001₆. Il en est de même pour la ou les couches suivantes si le réacteur catalytique inclut une ou plusieurs couches autres que les couches 3001 et 3002.

Selon une des caractéristiques de l'invention, des moyens de séparation, par exemple des plaques, de préférence démontables, assurent physiquement le zonage interne du réacteur catalytique 301. Dans la figure 1, un premier jeu de plaques 320, représenté seulement en partie pour des raisons de visibilité, assure le zonage de la première couche 3001, en étant agencé dans la région volumique V de manière à délimiter les zones précitées V₁ à V₆, tandis qu'un second jeu de plaques 330, représenté seulement en partie, assure le zonage de la seconde couche 3002 du catalyseur, en étant agencé dans le volume d'alimentation en fumées de cette seconde couche 3002, ce volume s'étendant de la sortie de la première couche à la seconde couche du catalyseur, de manière à y délimiter des zones similaires aux zones V₁ à V₆ dans la région V. Si plus que deux couches de catalyseurs sont présentes, le zonage est étendu d'une couche de catalyseur à l'autre par d'autres moyens, comme des jeux de plaques analogues à 320 ou 330.

A titre de variante non représentée, les différentes zones des volumes respectifs d'alimentation des différentes couches 3001 et 3002 du catalyseur, ainsi que les portions de ces couches qui leur sont respectivement associées, sont réparties suivant une seule rangée.

Il est important de noter que la segmentation du réacteur de dénitrification 301 est interne, et que l'on n'isole pas une partie ou une autre du réacteur par des registres ou des vannes. La totalité des fumées traverse, en permanence, la totalité du catalyseur, même quand on en régénère une partie.

Par ailleurs, selon une caractéristique essentielle de l'invention, la température de l'alimentation en vapeur d'eau surchauffée 7', qui présente avantageusement une valeur comprise entre 250°C et 450°C, est supérieure à celle des fumées 12 admises dans le catalyseur du réacteur SCR 301. La vapeur d'eau 7' a pour fonction de régénérer le catalyseur par une action essentiellement thermique. Sous l'action de cette vapeur d'eau 7', la partie du catalyseur qui est soumise à l'action de la vapeur est chauffée au-delà de sa température normale d'exploitation. Accessoirement et avantageusement, cette vapeur d'eau 7' induit également une action mécanique sur le catalyseur, par soufflage des poussières déposées sur ce catalyseur.

Au sein de l'installation, la vapeur d'eau surchauffée 7' est distribuée par des moyens de distribution qui comprennent, entre autres, des éléments de sortie de ce fluide : dans l'exemple de réalisation considéré sur la figure 1, ces éléments de sortie sont au nombre de douze et sont référencés, par groupe de deux exemplaires, 310₁ à 310₆. Ces éléments de sortie 310₁ à 310₆ sont situés en amont de la première couche de catalyseur 3001, en étant répartis dans les zones V₁ à V₆ de la région V d'alimentation de cette couche 3001 en fumées. Plus précisément, dans l'exemple représenté sur la figure, les deux éléments de sortie 310₁ sont dans la zone V₁, les deux éléments de sortie 310₂ sont dans la zone V₂, et ainsi de suite. Il est bien entendu possible d'avoir un nombre d'éléments de sortie différents de deux par zone du volume V, par exemple d'un ou plus de deux.

En pratique, les éléments de sortie 310₁ à 310₆ sont constitués individuellement de buses permettant de délivrer la vapeur d'eau surchauffée 7'. A titre de variante, chacun de ces éléments de sortie est constitué d'un simple tuyau, percé d'un orifice terminal.

De plus, l'installation comporte des moyens permettant de commander l'alimentation des moyens de distribution précités par la vapeur d'eau surchauffée 7'. Typiquement, ces moyens de commande sont constitués par un jeu de vannes 311₁ à 311₆ qui sont respectivement associées aux éléments de sortie 310₁ à 310₆. Par exemple, comme sur la figure 1, l'alimentation des deux éléments de sortie 310₁ est commandée par la même vanne 311₁, et il en est de même pour les autres éléments de sortie. Bien entendu, à titre de variante non représentée, une vanne peut être utilisée pour commander l'alimentation de chacun des deux éléments de sortie 310₁, les deux vannes ainsi associées à ces éléments 310₁ étant commandées conjointement. Dans tous les cas, une caractéristique essentielle de l'invention est que les vannes 311₁ à 311₆ sont conçues pour être pilotées de manière indépendante les unes des autres, autrement dit, on peut commander sélectivement l'ouverture de la ou des vannes associées aux éléments de sortie situés dans une des zones V₁ à V₆, pendant que toutes les autres vannes de l'installation sont fermées. On comprend donc qu'au moins une vanne est associée par zone du volume segmenté V, mais plus d'une vanne peut exister par zone.

Selon l'invention, afin de régénérer le catalyseur 301, on ouvre de manière successive les vannes 311₁ à 311₆ pendant que toutes les autres vannes restent fermées, ce qui a pour effet d'admettre la vapeur d'eau surchauffée 7' dans les moyens de distribution jusqu'aux éléments de sortie 310₁ à 310₆, ces éléments de sortie étant ainsi actifs les uns après les autres. Il en résulte que les différentes zones V₁ à V₆ de la région d'alimentation V, segmentée par le jeu de plaques 320, sont, successivement et une par une, alimentées par la vapeur d'eau 7'. Cette vapeur d'eau 7', du fait de la segmentation en zones par le jeu de plaques 320, réchauffe ainsi d'abord la portion 3001 de la couche de catalyseur 3001 et la portion 3002₁ de la couche de catalyseur 300₂, ainsi que, le cas échéant, des portions similaires de couches additionnelles, couche par couche, puis une fois que l'admission en vapeur d'eau dans la zone V₁ cesse au profit de la zone V₂, la vapeur d'eau 7' réchauffe alors les portions 3001₂ et 3002₂ des couches de catalyseur 3001 et 3002, ainsi que, le cas échéant, des portions similaires de couches additionnelles, couche par couche. C'est donc, pour toutes les couches de catalyseur, les portions de ces couches de catalyseur, se succédant via des zones, en correspondance les uns avec les autres, des volumes d'alimentation de ces couches, qui sont réchauffées et ainsi régénérées. Une autre façon de voir les choses est de considérer que l'ensemble des moyens de segmentation physiques, à savoir les jeux de plaques 320 et 330 sur la figure 1, étendent la segmentation du volume amont V à l'ensemble des couches et que, lors de l'activation d'une des zones V₁ à V₆, cette zone et toutes les zones en correspondance avec cette dernière servent à réchauffer et régénérer la portion correspondante du catalyseur, pour toutes les couches du catalyseur. Quand un des moyens de distribution de la vapeur d'eau 7' est activé, par exemple 310₁, c'est l'ensemble des portions 3001₁, 3001₂ respectives des couches 3001 et 3002 du catalyseur, qui lui est associé par le biais des jeux de plaques 320 et 330, qui est réchauffé. Ce réchauffement conduit à une désorption des poisons et des sels volatils du catalyseur, ce qui régénère la portion de catalyseur concernée de chaque couche du catalyseur.

Ainsi, selon une des caractéristiques importantes de l'invention, lors de la régénération, portion par portion, du réacteur catalytique 301, le flux des fumées 12 n'est pas interrompu, ni l'admission des réactifs utilisés pour réduire les oxydes d'azote contenus dans les fumées. Globalement, non seulement l'ensemble du réacteur catalytique reste opérationnel, mais aussi la totalité du catalyseur continue à travailler à la dénitrification puisque toutes les portions de toutes les couches du catalyseur continuent à recevoir des fumées et du réactif de neutralisation, à tout moment. Aussi, la régénération du réacteur 301 est faite en ligne, sans nécessiter un arrêt de l'installation et sans réduction de capacité.

Pour une bonne mise en oeuvre de l'invention, il est avantageux que la température de la surface d'entrée du catalyseur soit, dans sa zone en cours de régénération, supérieure à 220°C, de préférence supérieure à 250°C. On comprend que l'obtention de cette température dépend directement de la température du mélange gazeux juste au-dessus du catalyseur. Il en résulte que le rapport des débits entre la vapeur d'eau surchauffée 7' et la quote-part des fumées 12 traversant la zone en cours de régénération découle du nombre de zones choisi pour segmenter la région V d'alimentation du catalyseur, ainsi que des températures respectives de la vapeur d'eau 7' et des fumées 12. Pour des raisons économiques, un compromis doit être trouvé entre l'efficacité de régénération et le nombre de zones, tout en tenant compte du débit de vapeur d'eau 7' disponible : un bon compromis est que chacune des zones V₁ à V₆ présente une section transversale valant, au niveau de la surface d'entrée de la couche de catalyseur 3001, entre 0,3 et 5 m², de préférence entre 0,5 et 1 m².

On notera que les moyens de segmentation 320, 330, ... ne s'étendent pas nécessairement, vers l'aval jusqu'à la surface d'entrée de la couche concernée du catalyseur, et vers l'amont jusqu'à la hauteur où sont situés les moyens de distribution ou bien jusqu'au niveau de la surface de sortie de la couche de catalyseur qui précède la couche conernée. En effet, le catalyseur est souvent installé en caissons métalliques, et la surface du catalyseur est un peu en retrait de la surface délimitée par le caisson. En pratique, ces moyens de segmentation canalisent avantageusement au moins 80% de la quantité de la vapeur d'eau 7' depuis les éléments de sortie 310₁, 310₂, 310₃, 310₄, 310₅ et 310₆ jusqu'à la surface d'entrée de la portion associée 3001₁, 3001₂, 3001₃, 3001₄, 3001₅ ou 3001₆ de la première couche 3001 du catalyseur, ainsi qu'entre les couches 3001 et 3002 et, le cas échéant, entre les couches additionnelles.

Sur la figure 2, on a représenté l'intégration globale du procédé dans une installation d'épuration de fumées. En fonctionnement, les fumées à épurer 1 traversent l'évaporateur 101 dont la fonction est de produire la vapeur 5 qui servira à la fois à l'activation des résidus recirculés 10 pour sa fraction 6 et qui servira de fluide de régénération 7' pour sa fraction 7, après surchauffe. Les fumées sortant de l'évaporateur 101 sont introduites dans le séparateur gaz-solides 201, après que les réactifs nécessaires à l'épuration des fumées aient été introduits, par la ligne 3 ou la ligne 3'. La localisation de ces points d'injection n'est pas objet de l'invention et l'un ou l'autre de ces points d'injection peut ne pas exister. Les résidus 8 qui contiennent encore l'excès de réactif qui n'a pas réagi est admis dans le contacteur gaz-solides 401, connu en soi et qui n'est pas objet de l'invention pour l'activation. Il s'agit par exemple d'un contacteur à double vis. Après avoir été mis en contact avec la vapeur, ces solides réactivés 11 sont retournés en amont du séparateur 201. La figure 2 présente un cas où ces solides 11 sont réintroduits en amont du séparateur 201 et aussi en amont de l'évaporateur de 101, mais il est tout à fait possible de réintroduire ces solides immédiatement en amont du séparateur 201, et en aval de l'évaporateur 101. Selon une des caractéristiques de l'invention, la fraction 7 de la vapeur produite 5 est envoyée par intermittence au réacteur 301 pour y servir de fluide de régénération, après avoir été surchauffée par l'unité 501. Cette unité 501 est d'une technologie connue en soi et est par exemple une batterie de chauffe électrique. Il est important de réaliser que cette fraction 7 n'est pas envoyée en permanence vers le réacteur 301, mais seulement lorsque la régénération de ce réacteur 301 est nécessaire. L'extraction de ce flux 7 se fait par un jeu d'électrovannes, non représenté.

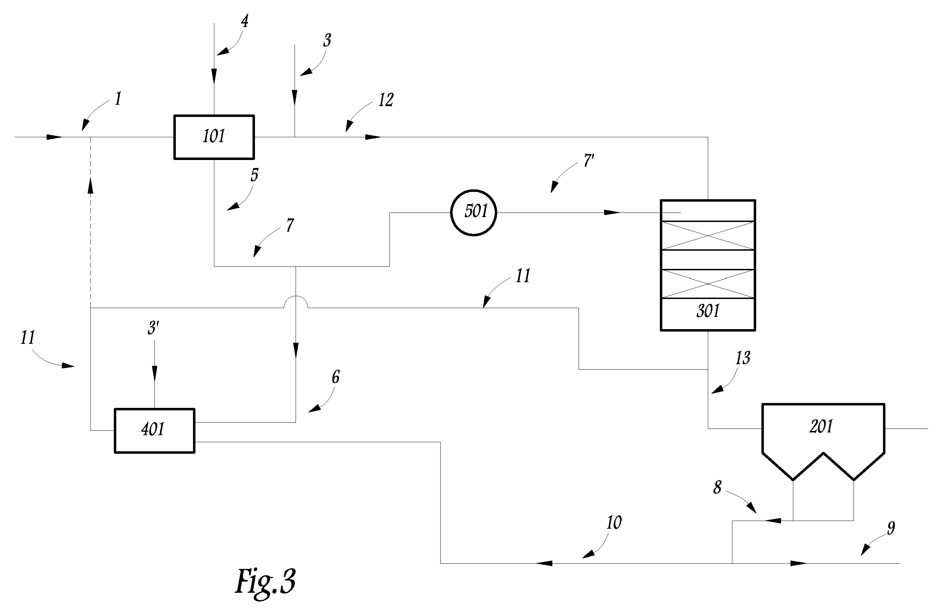

La figure 3 représente une variante du procédé dans lequel le réacteur catalytique 301 est situé non pas en aval comme sur la figure 2, mais en amont du séparateur gaz-solides 201, étant remarqué que, dans tous les cas, l'évaporateur 101 est en amont du réacteur de dénitrification 301. Dans cette variante, les fumées à épurer 1 traversent l'évaporateur 101 puis sont introduites dans le réacteur catalytique de dénitrification 301. Les fumées dénitrifiées 13 qui en sortent sont alors admises dans le séparateur gaz-solides 201 (un filtre à manches) en vue d'éliminer les polluants acides comme HCl et SO₂. Une fraction 10, majoritaire, des solides collectés 8 est introduite dans un le contacteur gaz-solides 401. Après avoir été mis en contact avec la vapeur, les solides réactivés 11 sont retournés en amont du séparateur 201. La figure 3 présente un cas où ces solides 11 sont réintroduits en amont du séparateur 201 et en aval du réacteur 301, mais il est tout à fait possible de réintroduire ces solides pour tout ou partie en amont du réacteur 301, comme indiqué en pointillés sur la figure 3.

Les avantages de l'invention sont nombreux et comprennent du fait de l'excellente intégration de la production de vapeur à la réactivation des résidus et à la régénération :
▪ une réduction des coûts d'investissement et des coûts opératoires,
▪ une régénération en ligne, qui permet de continuer à utiliser le réacteur de SCR dans son intégralité, y compris pendant la régénération,
▪ une réduction importante de la stoechiométrie du réactif de déchloruration/désulfuration utilisé, et
▪ une durée de vie effective du catalyseur de SCR plus longue, du fait de la possibilité de réaliser des régénérations fréquentes, sans pénalité pour l'exploitation.

## Revendications

1. Procédé d'épuration de fumées, dans lequel :
∘ de la vapeur d'eau (5) est générée par un évaporateur (101) situé sur le cheminement des fumées à traiter,
∘ une partie (6) de cette vapeur est envoyée à un réacteur d'activation (401) pour activer des résidus qui ont été collectés (10) sur un filtre à manches (201) auquel les fumées à traiter sont envoyées, et qui ont été recyclés pour la majeure partie vers le réacteur d'activation,
∘ une autre partie (7) de cette vapeur, utilisée de manière intermittente, est surchauffée et envoyée à un réacteur (301) de dénitrification catalytique des fumées à traiter, pour régénérer son catalyseur réparti en plusieurs couches (3001, 3002), ce réacteur de dénitrification catalytique étant segmenté de manière interne par des moyens de segmentation physiques (320, 330) de sorte que la segmentation correspondante est maintenue pour toutes les couches du catalyseur, et
∘ les fumées à traiter sont mélangées à un réactif de dénitrification et sont ensuite introduites en permanence sur la totalité du catalyseur, y compris pendant la régénération du catalyseur réalisée par la vapeur d'eau surchauffée (7') qui est introduite de manière intermittente dans le réacteur de dénitrification catalytique, segment après segment.

2. Procédé selon la revendication 1, dans lequel la vapeur d'eau (7) est surchauffée à une température comprise entre 250°C et 450°C.

3. Procédé selon l'une quelconque des revendications précédentes, dans lequel, lors de la régénération, la vapeur d'eau surchauffée (7') est introduite dans chaque segment du réacteur de dénitrification catalytique (301) pendant un temps compris entre 10 secondes et 5 minutes.

4. Procédé selon l'une quelconque des revendications précédentes, dans lequel les moyens de segmentation physiques (320, 330) sont agencés dans les volumes d'alimentation en fumées des couches (3001, 3002) du catalyseur.

5. Procédé selon l'une quelconque des revendications précédentes, dans lequel les moyens de segmentation physiques (320, 330) sont des plaques de canalisation de flux.

6. Procédé selon l'une quelconque des revendications précédentes, dans lequel le réacteur de dénitrification catalytique (301) est situé en aval du filtre à manches (201).

7. Procédé selon l'une quelconque des revendications 1 à 5, **caractérisé en ce que** le réacteur de dénitrification catalytique (301) est situé en amont du filtre à manches (201).

8. Procédé selon l'une quelconque des revendications précédentes, dans lequel des résidus solides (11), issus du réacteur d'activation (401), sont retournés en amont du filtre à manches (201).

9. Installation d'épuration de fumées, comprenant :
∘ un évaporateur (101), à travers lequel des fumées à traiter circulent et qui produit de la vapeur d'eau (5) par transfert de chaleur provenant de ces fumées,
∘ un filtre à manches (201) alimenté par les fumées à traiter,
∘ un réacteur d'activation (401), qui, en entrée, est raccordé à la fois à la sortie en résidus solides (8) du filtre à manches (201) et à la sortie en vapeur d'eau (5) de l'évaporateur (101),
∘ un réacteur de dénitrification catalytique (301), qui est segmenté de manière interne par des moyens de segmentation physiques (320, 330) de sorte que la segmentation correspondante est maintenue pour toutes les couches (3001, 3002) du catalyseur de ce réacteur de dénitrification, lequel réacteur de dénitrification est alimenté, d'une part, en permanence et sur la totalité de son catalyseur, par les fumées à traiter et, d'autre part, de manière intermittente et segment après segment, par une partie (7) de la vapeur d'eau (5) produite par l'évaporateur (101), et
∘ des moyens (501) de chauffe de vapeur d'eau, à travers lesquels circule la vapeur d'eau (7) envoyée au réacteur de dénitrification catalytique (301) et qui sont adaptés pour surchauffer cette vapeur d'eau.

## Patentansprüche

1. Verfahren zur Reinigung von Rauchgasen, in dem:
- Wasserdampf (5) von einem Verdampfer (101) erzeugt wird, der sich in einem Weg der zu behandelnden Rauchgase befindet,
- ein Teil (6) dieses Dampfs zu einem Aktivierungsreaktor (401) zum Aktivieren von Reststoffen geleitet wird, die in einem Schlauchfilter (201) gesammelt wurden (10), zu dem die zu behandelnden Rauchgase geschickt werden, und die zum Großteil in Richtung des Aktivierungsreaktors wiederverwertet wurden,
- ein anderer Teil (7) dieses Dampfs, der zweitweise verwendet wird, überhitzt wird und zu einem Reaktor (301) zur katalytischen Denitrifikation der zu behandelnden Rauchgase zum Regenerieren seines in mehrere Schichten (3001, 3002) eingeteilten Katalysators geleitet wird, wobei dieser Reaktor zur katalytischen Denitrifikation intern durch physische Segmentiermittel (320, 330) in der Art segmentiert ist, dass die entsprechende Segmentierung für alle der Schichten des Katalysators aufrechterhalten wird und
- die zu behandelnden Rauchgase mit einem Denitrifikationsreagenz vermischt werden und danach permanent auf den gesamten Katalysator eingeführt werden, wo sie sich während der Regeneration des Katalysators befinden, die durch den überhitzten Wasserdampf (7') realisiert wird, der zeitweilig Segment für Segment in den Reaktor zur katalytischen Denitrifikation eingeführt wird.

2. Verfahren gemäß Anspruch 1, in dem der Wasserdampf (7) auf eine Temperatur überhitzt wird, die zwischen 250°C und 450°C liegt.

3. Verfahren gemäß einem der vorhergehenden Ansprüche, in dem bei der Regeneration der überhitzte Wasserdampf (7') in jedes Segment des Reaktors zur katalytischen Denitrifikation (301) während einer Zeit, die zwischen 10 Sekunden und 5 Minuten liegt, eingeführt wird.

4. Verfahren gemäß einem der vorhergehenden Ansprüche, in dem die physischen Segmentiermittel (320, 330) in Rauchgasversorgungsvolumen der Schichten (3001, 3002) des Katalysators angeordnet sind.

5. Verfahren gemäß einem der vorhergehenden Ansprüche, in dem die physikalischen Segmentiermittel (320, 330) Flusskanalisierungsplatten sind.

6. Verfahren gemäß einem der vorhergehenden Ansprüche, in dem der Reaktor zur katalytischen Denitrifikation (301) dem Schlauchfilter (201) nachgeschaltet ist.

7. Verfahren gemäß einem der Ansprüche 1 bis 5, dadurch charakterisiert, dass der Reaktor zur katalytischen Denitrifikation (301) dem Schlauchfilter (201) vorgeschaltet ist.

8. Verfahren gemäß einem der vorhergehenden Ansprüche, in dem feste Reststoffe (11), abgegeben vom Aktivierungsreaktor (401), stromaufwärts zum Schlauchfilter (201) zurückgeführt werden.

9. Anlage zur Reinigung von Rauchgasen, aufweisend:
- einen Verdampfer (101), durch den zu behandelnde Rauchgase zirkulieren und der durch den Transfer von von diesen Rauchgasen stammender Hitze Wasserdampf (5) erzeugt,
- ein Schlauchfilter (201), der mit den zu behandelnden Rauchgasen versorgt wird,
- einen Aktivierungsreaktor (401), der am Eingang gleichzeitig mit dem Ausgang der festen Reststoffe (8) des Schlauchfilters (201) und mit dem Ausgang des Wasserdampfs (5) des Verdampfers (101) verbunden ist,
- ein Reaktor zur katalytischen Denitrifikation (301), der intern durch physische Segmentiermittel (320, 330) in der Art segmentiert ist, dass die entsprechende Segmentierung für alle der Schichten des Katalysators aufrechterhalten wird, wobei der Reaktor zur Denitrifikation einerseits permanent und auf seinem gesamten Katalysator mit den zu behandelnden Rauchgasen versorgt wird und andererseits zeitweilig und Segment für Segment mit einem Teil (7) des von dem Verdampfer (101) erzeugten Wasserdampfs (5) versorgt wird und
- Mittel (501) zum Heizen des Wasserdampfs, durch die der Wasserdampf (7), der zu dem Reaktor zur katalytischen Denitrifikation (301) geleitet wird, zirkuliert, und die zum Überhitzen dieses Wasserdampfs eingerichtet sind.

## Claims

1. Method for purifying fumes, in which:
• steam (5) is generated by an evaporator (101) located on the path of the fumes to be treated,
• a portion (6) of this steam is passed to an activation reactor (401) to activate residues, which have been collected (10) in a bag filter (201) the fumes to be treated were passed to and which have been recirculated for the most part to the activation reactor,
• another portion (7) of this steam used intermittently is superheated and passed to a catalytic denitrification reactor (301) for the fumes to be treated to regenerate its catalyst that has been distributed over several layers (3001, 3002), wherein this catalytic denitrification reactor is segmented internally by physical segmentation devices (320, 330) in such a way that the corresponding segmentation is maintained for all the layers of the catalyst, and
• the fumes to be treated are mixed with a denitrification reagent and are then fed over the entire catalyst continuously including during the regeneration of the catalyst achieved by the superheated steam (7'), which is passed intermittently into the catalytic denitrification reactor, segment by segment.

2. Method according to claim 1, in which the steam (7) is superheated to a temperature ranging between 250°C and 450°C.

3. Method according to any one of the preceding claims, in which during the regeneration the superheated steam (7') is passed into each segment of the catalytic denitrification reactor (301) for a period ranging between 10 seconds and 5 minutes.

4. Method according to any one of the preceding claims, in which the physical segmentation devices (320, 330) are arranged in the spaces for supplying the layers (3001, 3002) of the catalyst with fumes.

5. Method according to any one of the preceding claims, in which the physical segmentation devices (320, 330) are flow guide plates.

6. Method according to any one of the preceding claims, in which the catalytic denitrification reactor (301) is located downstream of the bag filter (201).

7. Method according to any one of claims 1 to 5, in which the catalytic denitrification reactor (301) is located upstream of the bag filter (201).

8. Method according to any one of the preceding claims, in which solid residues (11) discharged from the activation reactor (401) are returned upstream of the bag filter (201).

9. Facility for purifying fumes comprising:
• an evaporator (101), through which fumes to be treated circulate and which produces steam (5) by the transfer of heat from these fumes,
• a bag filter (201) fed by fumes to be treated,
• an activation reactor (401), which at the inlet is connected both to the outlet for solid residues (8) of the bag filter (201) and to the outlet for steam (5) of the evaporator (101),
• a catalytic denitrification reactor (301), which is segmented internally by physical segmentation devices (320, 330) in such a way that the corresponding segmentation is maintained for all the layers (3001, 3002) of the catalyst of this denitrification reactor, wherein the denitrification reactor is fed both continuously with fumes to be treated over the entire catalyst and also intermittently and segment by segment with a portion (7) of the steam (5) produced by the evaporator (101), and
• devices (501) for heating steam, through which the steam (7) passed to the catalytic denitrification reactor (301) circulates and which are suitable for superheating this steam.
